# EUROPÄISCHE PATENTSCHRIFT

(11) **EP 1 234 192 B1**
(45) Veröffentlichungstag und Bekanntmachung des Hinweises auf die Patenterteilung: **03.09.2003**
(21) Anmeldenummer: 00949209.1
(22) Anmeldetag: 24.06.2000
(51) Int. Cl.: G01S 17/08, G01S 7/00, B66C 13/46, G01S 17/87

(54) **DATENÜBERTRAGUNG VON SCHALTINFORMATION MITTELS EINES ENTFERNUNGSMESSERS**
DATA TRANSMISSION OF CONTROL INFORMATION BY MEANS OF A TELEMETER
TRANSMISSION D'INFORMATIONS DE COMMANDE PAR L'INTERMEDIAIRE D'UN TELEMETRE

(30) Priorität: 17.08.1999 DE 19938185
(43) Veröffentlichungstag der Anmeldung: 28.08.2002
(73) Patentinhaber: IDM GmbH Infrarot Sensoren, 88138 Weissenberg (DE)
(72) Erfinder: TIEDECKE, Joachim, D-88147 Achberg (DE); VISSCHER, Egbert, Ronald, Ivo, Casimir, CH-9434 AU (CH)
(74) Vertreter: Lenzing, Andreas, Dr.
(86) Internationale Anmeldenummer: EP0005839
(87) Internationale Veröffentlichungsnummer: WO01013139

(56) Entgegenhaltungen:
- EP-A- 0 689 033
- DE-A- 3 623 423
- US-A- 4 560 270
- US-A- 5 539 513

## Beschreibung

Die vorliegende Erfindung betrifft eine Vorrichtung mit den Merkmalen des Oberbegriffs des Anspruchs 1 sowie ein Verfahren mit den Merkmalen des Oberbegriffs des Anspruchs 8.

Derartige Entfernungsmesser sind aus der Praxis bekannt und dienen zur Überwachung des Abstandes kollisionsgefährdeter Objekte voneinander, beispielsweise des Abstandes eines Portalkrans von einer Gebäudewand. Bei den bekannten Entfernungsmessern wird ein Laserstrahl in Richtung auf einen Retroreflektor ausgesendet und das reflektierte Signal in dem Entfernungsmesser empfangen, so daß die Laufzeit ausgewertet werden kann. Die Laufzeit ist das Maß für die Entfernung. Der Entfernungsmesser ist hierbei im allgemeinen dem bewegten Objekt zugeordnet, während der Reflektor am gegenüberliegenden Ende der zu vermessenden Strecke liegt. Diese Anordnung hat den Vorteil, daß die Ergebnisse der Entfernungsmessung unmittelbar an dem bewegten Objekt verfügbar sind, also beispielsweise unmittelbar in dem Kran ausgewertet werden können und an die Motorsteuerung übermittelt werden können. Bei dieser Konfiguration ist jedoch nachteilig, daß der Entfernungsmesser die Nick- und Gierbewegungen des Krans zwangsläufig mitmacht. Dies führt dazu, daß über eine große Entfernung von bis zu einigen hundert Metern schon bei kleinen Nick- oder Gierwinkeln der Laserstrahl um einige Meter abgelenkt wird. Die zuverlässige Reflexion am gegenüberliegenden Ende der Strecke läßt sich hierbei nur dadurch erzielen, daß der Öffnungswinkel des Laserstrahls und/oder der gegenüberliegende Reflektor sehr groß gemacht wird oder die Eigenbewegung des Krans durch eine Nachführung des Meßstrahls kompensiert wird. Die erste Möglichkeit erfordert relativ hohe Strahlungsleistungen des Laserstrahls oder führt zu unerwünscht großen Reflektoren. Die zweite Möglichkeit ist relativ teuer.

Eine andere Möglichkeit besteht darin, den Entfernungsmesser dort anzubringen, wo geringere oder gar keine Nick- und Gierbewegungen auftreten, also beispielsweise an einer Gebäudewand, die ein Ende der Meßstrecke darstellt. Dann trägt der bewegte Teil der Meßstrecke den Reflektor. Ein stabil ausgerichteter Meßstrahl mit kleinem Öffnungswinkel trifft dann zuverlässig auch einen relativ kleinen Reflektor, unabhängig davon, ob dieser um einige Grad in der Horizontalen oder in der Vertikalen verschwenkt wird, solange der Meßstrahl und die Meßstrecke im wesentlichen parallel zu der Bewegungsrichtung des bewegten Objekts liegen. Diese Lösung erfordert jedoch, daß die Meßdaten von dem ruhenden Entfernungsmesser zu dem bewegten Objekt, in dessen Fahrmotorsteuerung eingegriffen werden soll, übertragen werden. Hierfür sind derzeit entweder eine drahtlose Meßdatenübertragung oder ein Schleppkabel bekannt. Beide Möglichkeiten der Datenübertragung sind mit zusätzlichen Bauteilen verbunden und folglich ebenfalls kostspielig.

Es ist deshalb Aufgabe der vorliegenden Erfindung, eine einfache Vorrichtung zur Übertragung von Informationen von dem Entfernungsmesser zu dem gegenüberliegenden Ende der Meßstrecke zu schaffen. Diese Aufgabe wird von einer Vorrichtung mit den Merkmalen des Anspruchs 1 gelöst. Außerdem ist es Aufgabe der vorliegenden Erfindung, ein Verfahren zur Übertragung derartiger Informationen zu schaffen. Diese Aufgabe wird von einem Verfahren mit den Merkmalen des Anspruchs 8 gelöst.

Weil bei der Vorrichtung zur Übertragung einer Information von einem mittels elektrischer Strahlung arbeitenden Entfernungsmesser zu einem entfernt liegenden Objekt, das die Strahlung reflektiert oder einen Reflektor für die Strahlung trägt und dessen Entfernung zu messen ist, vorgesehen ist, daß der Strahlung die Information aufgeprägt ist und dem Objekt ein Empfänger für die Strahlung zugeordnet ist, kann die Information mit der als Meßstrahl ausgesandten Strahlung gemeinsam übertragen werden. Separate Strahlungssender und - empfänger oder Schleppkabel sind nicht erforderlich.

Vorzugsweise arbeitet die Vorrichtung mit Laserlicht, insbesondere im Infrarotbereich. Geometrisch günstige Verhältnisse ergeben sich, wenn der Empfänger mittig in dem Reflektor angeordnet ist. Der Entfernungsmesser kann besonders genau auf den Reflektor ausgerichtet werden, wenn der Entfernungsmesser im Betrieb ruht und der Reflektor mit dem Empfänger für die Information einem verfahrbaren Objekt zugeordnet ist. Eine einfache Kopplung mit dem Antrieb des bewegten Objekts ist möglich, wenn der Empfänger mit einer Auswerteschaltung verbunden ist, die die in der Strahlung enthaltene Information auswertet und an eine Steuerung übermittelt. Insbesondere ergeben sich Vorteile, wenn der Entfernungsmesser an einer Gebäudewand angeordnet ist und das Objekt ein Kran ist, dessen Fahrmotorsteuerung von den Informationen beeinflußt wird.

Weil bei dem erfindungsgemäßen Verfahren vorgesehen ist, daß die Strahlung moduliert ist und die Information durch Änderung der Modulation dargestellt ist, kann die Entfernungsmessung selbst im wesentlichen unbeeinflußt bleiben. Dabei kann die Information in besonders einfacher Weise durch die Frequenz der Modulationsänderung übertragen werden. Eine geeignete Modulationsänderung ist der periodische Wechsel zwischen verschiedenen Modulationsarten, vorzugsweise zwischen Frequenzmodulation und Pulsmodulation.

Im folgenden wir ein Ausführungsbeispiel der vorliegenden Erfindung anhand der Zeichnung beschrieben.

Es zeigt:

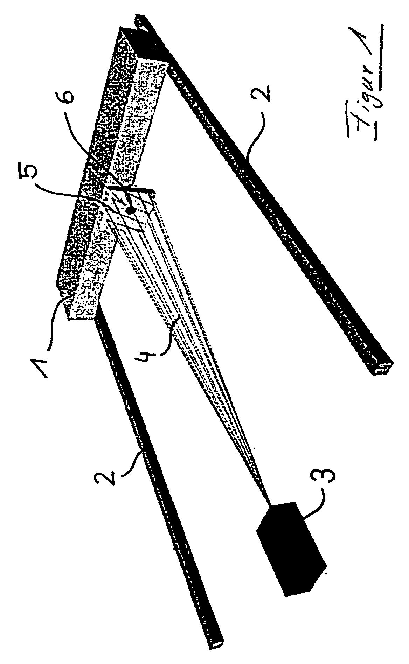

- Figur 1:: Eine schematische Anordnung eines Entfernungsmessers relativ zu einem Portalkran.

Die Figur 1 zeigt schematisch einen Portalkran 1, der auf zwei Schienen 2 in einem Gebäude in Längsrichtung verfahrbar ist. An einem Ende der Schienen 2 ist an dem (nicht dargestellten) Gebäude ein Entfernungsmesser 3 mit einem Emitter und einem Sensor für Laserlicht im Infrarotbereich angeordnet. Das emittierte Laserlicht bildet einen Meßstrahl 4, der auf einen gegenüberliegenden, an dem Kran 1 befestigten Reflektor 5 ausgerichtet ist. Die Verbindungslinie zwischen dem Sensor 3 und dem Reflektor 5 stellt eine Meßachse dar, die parallel zu der Bewegungsrichtung des Krans 1 in dem Gebäude ausgerichtet ist. Der Meßstrahl 4 ist mittig auf den Reflektor 5 ausgerichtet. Der Reflektor 5 wiederum trägt in seiner Mitte einen Empfänger 6, der zum Empfang der von dem Entfernungsmesser 3 emittierten Strahlung eingerichtet ist.

Im Betrieb wird der Kran 1 entlang den Schienen 2 in dem Gebäude verfahren. Hierbei emittiert der Entfernungsmesser 3 regelmäßig Lichtpulse, die von dem Reflektor 5 reflektiert und im Entfernungsmesser 3 wiederum registriert werden. Die Laufzeit der Lichtpulse wird als Maß für die Entfernung zwischen dem Kran und dem Entfernungsmesser 3 und damit der Gebäudewand ausgewertet. Sobald der Kran sich dem Bereich minimaler oder maximaler Entfernung von dem Entfernungsmesser 3 nähert, soll dem Fahrantrieb des Krans automatisch zunächst ein Signal für Langsamfahrt und dann für eine einzuleitende Bremsung übermittelt werden. Weitere Signale, die übertragen werden sollen, sind ein Signal für die Störung, ein Signal für eine erforderliche oder momentan durchzuführende Wartung sowie ein Signal für fehlerfreien Betrieb.

Im einfachsten Fall wird das von Entfernungsmesser ausgesandte Licht gepulst, wobei verschiedene zeitliche Abstände der Lichtpulse möglich sind. Dies stellt eine veränderliche Frequenz der Meßstrahlung dar.

Diese Frequenz, die die zu übermittelnde Information trägt, wird in dem Empfänger 6 registriert und von einer nachgeordneten Auswerteschaltung ausgewertet. Das entsprechende elektronische Signal dieser Information steht folglich unmittelbar in dem Kran 1 zur Verfügung und muß nicht mehr über eine separate Strecke von dem Entfernungsmesser zu dem Kran 1 übermittelt werden. Als Ausführungsbeispiel kann die Frequenz der Meßimpulse wie folgt den Informationen zugeordnet werden:
1. Frequenz = 0 Hz (es wird kein Meßsignal ausgesendet) wird zur Übertragung der Information "Fehler" genutzt. Dieses Signal liegt beispielsweise schon dann an, wenn der Meßstrahl in irgendeiner Weise unterbrochen wird, so daß der Entfernungsmesser nicht mehr zuverlässig arbeiten kann und somit die Betriebssicherheit des Krans 1 gefährdet wäre.
2. Mit einer niedrigen Pulsfrequenz von 10 Hz kann das Signal für eine erforderliche Wartung übermittelt werden.
3. Mit einer Frequenz von 100 Hz kann dem Empfänger die Information übermittelt werden, daß ein normaler Betriebszustand besteht.
4. Eine Frequenz von 1000 Hz kann mit der Information belegt sein, daß eine Bremsung zur Vermeidung einer Kollision auszulösen ist.
5. Eine Frequenz von 10.000 Hz kann das Signal für Langsamfahrt bedeuten, das eine langsame Annäherung an die Endpunkte des Fahrweges auslöst.

Alternativ kann die Information auch dadurch übertragen werden, daß unterschiedliche Pulslängen verwendet werden, so daß eine Pulsweitenmodulation des Signals erreicht wird. Andere Modulationsarten sind ebenfalls denkbar. Auch kann das Signal darin bestehen, daß ein Übergang von einer Modulationsart zur anderen erfolgt.

## Patentansprüche

1. Vorrichtung zur Übertragung einer Information von einem mittels elektromagnetischer Strahlung arbeitenden Entfernungsmesser (3) zu einem entfernt liegenden Objekt (1), das die Strahlung reflektiert und dessen Entfernung zu messen ist, wobei der Strahlung die Information aufgeprägt ist und dem Objekt (1) ein Empfänger (6) für die Strahlung zugeordnet ist, **dadurch gekennzeichnet, dass** das Objekt (1) ein Kran ist, dessen Fahrmotorsteuerung von den Informationen beeinflusst wird und dass die von dem Entfernungsmesser zu übertragende Information eine Schaltinformation für die Fahrmotorsteuerung des Krans ist.

2. Vorrichtung nach Anspruch 1, **dadurch gekennzeichnet, daß** das Objekt (1) einen Reflektor (5) für die Strahlung trägt.

3. Vorrichtung nach Anspruch 2, **dadurch gekennzeichnet, daß** die Strahlung Laserlicht, vorzugsweise im Infrarotbereich, ist.

4. Vorrichtung nach einem der vorhergehenden Ansprüche, **dadurch gekennzeichnet, daß** der Empfänger (6) mittig in dem Reflektor (5) angeordnet ist.

5. Vorrichtung nach einem der vorhergehenden Ansprüche, **dadurch gekennzeichnet, daß** der Entfernungsmesser (4) im Betrieb ruht und der Reflektor (5) mit dem Empfänger (6) einem verfahrbaren Objekt (1) zugeordnet ist.

6. Vorrichtung nach einem der vorhergehenden Ansprüche, **dadurch gekennzeichnet, daß** eine Auswerteschaltung die in der Strahlung enthaltene Information auswertet und an eine Steuerung übermittelt.

7. Vorrichtung nach einem der vorhergehenden Ansprüche, **dadurch gekennzeichnet, daß** der Entfernungsmesser (3) an einer Gebäudewand angeordnet ist und daß das Objekt (1) ein Kran ist, dessen Fahrmotorsteuerung von den Informationen beeinflußt wird.

8. Verfahren zur Übertragung einer Schaltinformation von einem mittels elektromagnetischer Strahlung arbeitenden Entfernungsmesser (3) zu einem entfernt liegenden Objekt (1), nämlich einem Kran, der die Strahlung reflektiert oder einen Reflektor (5) für die Strahlung trägt und dessen Entfernung zu messen ist, **dadurch gekennzeichnet, daß** die Strahlung moduliert ist und daß die Schaltinformation durch Änderung der Modulation dargestellt wird.

9. Verfahren nach Anspruch 8, **dadurch gekennzeichnet, daß** die Schaltinformation durch die Frequenz der Modulationsänderung übertragen wird.

10. Verfahren nach einem der vorhergehenden Ansprüche 8 - 9, **dadurch gekennzeichnet, daß** die Modulationsänderung der periodische Wechsel zwischen verschiedenen Modulationsarten, vorzugsweise zwischen Frequenzmodulation und Pulsmodulation ist.

11. Vorrichtung oder Verfahren nach einem der vorhergehenden Ansprüche, **dadurch gekennzeichnet, daß** der Entfernungsmesser (3) ein Pulslaufzeit-Entfernungsmesser ist und die Schaltinformation über eine Variation der Pulsabstände und/oder der Pulsdauer angezeigt wird.

## Claims

1. Device for transferring information from a telemeter (3) operating by means of an electromagnetic radiation to a distant object (1) which reflects the radiation and whose distance is to be measured, wherein the information is marked on the radiation and a receiver (6) for the radiation is assigned to the object (1), **characterised in that** the object (1) is a crane whose traction engine control is influenced by the information, and **in that** the information to be transferred from the telemeter is switching information for the traction engine control of the crane.

2. Device according to Claim 1, **characterised in that** the object (1) carries a reflector (5) for the radiation.

3. Device according to Claim 2, **characterised in that** the radiation takes the form of a laser light, preferably in the infrared range.

4. Device according to any one of the preceding claims, **characterised in that** the receiver (6) is arranged centrally in the reflector (5).

5. Device according to any one of the preceding claims, **characterised in that** the telemeter (4) is at rest during operation and the reflector (5) with the receiver (6) is assigned to a movable object (1).

6. Device according to any one of preceding claims, **characterised in that** an evaluation circuit evaluates the information contained in the radiation and transfers it to a control system.

7. Device according to any one of the preceding claims, **characterised in that** the telemeter (3) is arranged on a building wall and **in that** the object (1) is a crane whose traction engine control system is influenced by the information.

8. Method for transferring switching information from a telemeter (3) operating by means of electromagnetic radiation to a distant object (1), namely a crane which reflects the radiation or carries a reflector (5) for the radiation, and whose distance is to be measured, **characterised in that** the radiation is modulated and **in that** the switching information is represented by varying the modulation.

9. Method according to Claim 8, **characterised in that** the switching information is transferred by the frequency of the modulation variation.

10. Method according to any one of the preceding Claims 8 - 9, **characterised in that** variation in modulation is the periodic variation between different types of modulation, preferably between frequency modulation and pulse modulation.

11. Device or method according to any one of the preceding claims, **characterised in that** the telemeter (3) is a pulse time telemeter and the switching information is indicated over a variation of pulse distances and/or of the pulse time.

## Revendications

1. Dispositif pour transmettre une information d'un télémètre (3) travaillant avec un rayonnement électromagnétique à un objet éloigné (1), qui réfléchit le rayonnement et dont la distance doit être mesurée, l'information étant appliquée au rayonnement, et un récepteur (6) pour le rayonnement étant associé à l'objet (1), **caractérisé en ce que** l'objet (1) est une grue, dont l'unité de commande du moteur de déplacement est influencée par les informations et que l'information devant être transmise par le télémètre est une information de commutation pour la commande du moteur de déplacement de la grue.

2. Dispositif selon la revendication 1, **caractérisé en ce que** l'objet (1) porte un réflecteur (5) pour le rayonnement.

3. Dispositif selon la revendication 2, **caractérisé en ce que** le rayonnement est une lumière laser, de préférence dans le domaine de l'infrarouge.

4. Dispositif selon l'une des revendications précédentes, **caractérisé en ce que** le récepteur (6) est disposé au centre dans le réflecteur (5).

5. Dispositif selon l'une des revendications précédentes, **caractérisé en ce que** le télémètre (4) est fixe en fonctionnement et que le réflecteur (5) équipé du récepteur (6) est associé à un objet déplaçable (1).

6. Dispositif selon l'une des revendications précédentes, **caractérisé en ce qu'**un circuit d'évaluation évalue l'information contenue dans le rayonnement et la transmet à une unité de commande.

7. Dispositif selon l'une des revendications précédentes, **caractérisé en ce que** le télémètre (3) est disposé sur un mur de bâtiment, que l'objet (1) est une grue, dont l'unité de commande du moteur de déplacement est influencée par les informations.

8. Procédé de transmission d'une information de commutation par un télémètre (3) travaillant avec un rayonnement électromagnétique, à un objet éloigné (1), à savoir une grue, qui réfléchit le rayonnement ou porte un réflecteur (5) pour le rayonnement, et dont la distance doit être mesurée, **caractérisé en ce que** le rayonnement est modulé et que l'information de commutation est représentée par variation de la modulation.

9. Procédé selon la revendication 8, **caractérisé en ce que** l'information de commutation est transmise par la fréquence de la variation de modulation.

10. Procédé selon l'une des revendications 8 à 9, **caractérisé en ce que** le changement de modulation est la variation périodique entre différents types de modulation, de préférence entre une modulation de fréquence et une modulation par impulsions.

11. Dispositif ou procédé selon l'une des revendications précédentes, **caractérisé en ce que** le télémètre (3) est un télémètre à temps de transit d'impulsions et l'information de commutation est affichée au moyen d'une variation des distances entre les impulsions et/ou de la durée des impulsions.
